# EUROPÄISCHE PATENTANMELDUNG

(11) **EP 3 041 063 A2**
(43) Veröffentlichungstag der Anmeldung: **06.07.2016**
(21) Anmeldenummer: 15002841.3
(22) Anmeldetag: 06.10.2015
(51) Int. Cl.: H01M 2/10, B60L 11/18, H01M 10/625, H01M 10/617, H01M 10/613, H01M 10/658

(54) **NUTZFAHRZEUG MIT EINER TRAKTIONSBATTERIE**

(30) Priorität: 12.12.2014 DE 102014018538
(71) Anmelder: MAN Truck & Bus AG, 80995 München (DE)
(72) Erfinder: Braun, Reimar, 81375 München (DE); Lechner, Michael, 85757 Karlsfeld (DE)

(57) **Zusammenfassung**

Die Erfindung betrifft ein Nutzfahrzeug mit einer Traktionsbatterie, die vorzugsweise an einer Fahrzeugaußenseite gehaltert ist. Die Traktionsbatterie umfasst ein Batteriegehäuse (3), in dem mehrere parallel und/oder seriell miteinander verschaltete und zu einem Zellenverbund zusammengefasste Einzelzellen angeordnet sind und das zur thermischen Isolierung außenseitig zumindest teilweise von einem Schaummaterial (4) umgeben ist.

## Beschreibung

Die Erfindung betrifft ein Nutzfahrzeug mit einer Traktionsbatterie, die vorzugsweise an einer Fahrzeugaußenseite gehaltert ist.

Hochvoltbatterien für Fahrzeuganwendungen, auch Batteriepacks genannt, bestehen aus vielen in Reihe und/oder parallel geschalteten Einzelzellen, z. B. Lithium-Ionen-Zellen. Als Stand der Technik bei Nutzfahrzeugen ist bekannt, dass derartige Hochvolt-Batterien mittels eines Kühlsystems und fluiddurchströmten Kühlplatten temperiert werden, um eine entstehende Verlustwärme abzuführen, damit der zulässige Betriebsbereich nicht verletzt wird.

Aus dem Stand der Technik sind hierzu Kühlvorrichtungen bekannt, bei denen ein Kältemittel durch eine mit Kühlkanälen versehene Kühlplatte (auch Wärmeleitplatte oder Verdampferplatte genannt) geleitet wird und eine gespeicherte Kälte an diese abgibt. Eine Anbindung der Kühlplatte an Einzelzellen der Batterie erfolgt z. B. über Wärmeleitfolie oder Vergussmasse.

Aus der DE 10 2007 063 178 A1 ist beispielsweise eine derartige Batterie mit einem Batteriegehäuse und einer Wärmeleitplatte zum Temperieren der Batterie bekannt, wobei die Batterie mehrere parallel und/oder seriell miteinander verschaltete Einzelzellen aufweist, die Wärme leitend mit der Wärmeleitplatte verbunden sind. Die Wärmeleitplatte weist im Bereich der Pole der Einzelzellen Bohrungen und/oder Einschnitte auf, in oder durch welche die Pole hinein- bzw. hindurchragen.

Die DE 10 2007 010 751 A1 offenbart eine Batterie mit einem Gehäuse, das einen Boden und eine Seitenwand umfasst, und mit einem in dem Gehäuse angeordneten Zellverbund von Zellen, wobei der Zellverbund mit einer Vergussmasse in dem Gehäuse befestigt ist. Die Vergussmasse reicht von dem Zellverbund bis zur Innenseite der Seitenwand. Das Gehäuse weist auf seiner Innenseite eine Isolationsschicht auf, bis zu der die Vergussmasse reicht. Die Isolationsschicht ist aus einem festen Schaum (Hart- oder Weichschaum) gebildet.

Aus der Druckschrift WO 2010/121831 A1 ist beispielsweise bekannt, dass die Batteriezellen gegen die Umwelt thermisch isoliert werden, um ein Auskühlen der Batterie zu verhindern. In der Druckschrift WO 2011/062551 A1 wird beschrieben, wie ein gegen Umwelteinflüsse abgeschlossener Energiespeicher luftgekühlt werden kann und die Wärme über einen Wärmetauscher abgeführt wird. Der Abschluss gegen Umwelteinflüsse verhindert, dass Luft mit Verunreinigungen direkt mit dem Energiespeicher in Berührung kommt.

Bei einem LKW, z. B. Fern- oder Verteilerverkehr, wird das Hochvolt-Batteriesystem während der Fahrt durch eine Kühlvorrichtung, wie beispielsweise vorstehend beschrieben, temperiert. Darüber hinaus ist bekannt, im Rahmen eines thermischen Nachlaufs, insbesondere bei Euro 6-konformen Fahrzeugen mit einem im Vergleich zu Euro 5-konformen Fahrzeugen höheren Wärmeeintrag auf Bauteile, die Kühlung für kurze Zeit nach Abstellen des Fahrzeugs nachlaufen zu lassen und sie danach auszuschalten. In dem Betriebszustand "Parken" (z. B. Ruhezeiten) ist die Kühlung nicht weiter aktiviert.

In Gegenden mit relativ geringer Sonneneinstrahlung kann durch die aus dem Stand der Technik bekannten Lösungen in der Regel sichergestellt werden, dass die Temperaturbetriebsgrenzen des Batteriepacks eingehalten werden.

Jedoch gibt es sogenannte Heißländer, in denen des Öfteren Temperaturen von über 35 Grad Celsius im Schatten erreicht werden, oder Länder mit einer jährlichen Gesamtsonneneinstrahlung, also der durchschnittlich in einem Jahr durch von der Sonne im gesamten Frequenzspektrum einfallenden Strahlungsenergie, von mehr als 1600 [kWh/m2]. In Heißländern kann mit den aus dem Stand der Technik bekannten Lösungen die Einhaltung der Temperaturbetriebsgrenzen nicht zuverlässig sichergestellt werden. Dies liegt insbesondere auch daran, dass bei Nutzfahrzeugen das Batteriepack in der Regel an einer Fahrzeugaußenseite gehaltert ist und dadurch wesentlich stärker äußeren Umwelteinflüssen ausgesetzt ist, als dies bei Traktionsbatterien von PKWs der Fall ist, die im Fahrzeuginneren angeordnet sind. Folglich kann in Heißländern eine intensive Sonneneinstrahlung oder eine aufgeheizte Straße (z. B. Asphalt) bei einem geparkten Nutzfahrzeug zu einer starken Erwärmung des Batteriegehäuses und der darin gehalterten Batteriezellen führen. Dabei kann es passieren, dass der Betriebsbereich von Lithium-Ionen-Zellen (ca. 40°C) überschritten wird und die Zellen vorschnell altern. Wenn die Erwärmung bevorzugt einseitig erfolgt, z. B. an der der Sonnenstrahlung ausgesetzten Gehäuseseite, kann es ggf. sogar zu einer unterschiedlichen Alterung der Zellen kommen.

Es ist somit eine Aufgabe der Erfindung, eine zu starke Erwärmung einer Traktionsbatterie im Betriebszustand "Parken" und dadurch bedingte Alterungseffekte der Batteriezellen zu vermeiden.

Diese Aufgabe wir durch ein Nutzfahrzeug mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird ein Nutzfahrzeug mit einer Traktionsbatterie vorgeschlagen, wobei die Traktionsbatterie in an sich bekannter Weise ein Batteriegehäuse aufweist, in dem mehrere parallel und/oder seriell miteinander verschaltete und zu einem Zellenverbund zusammengefasste Einzelzellen angeordnet sind. Ferner kann eine Kühlvorrichtung zum Temperieren der Batterie vorgesehen sein, die eine im Batteriegehäuse angeordnete Wärmeleiteinrichtung, vorzugsweise in Form einer Kühlplatte, aufweist, die wärmeleitend mit dem Zellenverbund verbunden ist, wobei das Batteriegehäuse einen Kühlflüssigkeitsanschluss zum Durchleiten einer Kühlflüssigkeit aufweist. Bei einer derartigen Traktionsbatterie schließt das Batteriegehäuse den Gehäuseinnenraum in der Regel luftdicht von der Umgebung ab, um eine Verschmutzung und Beschädigung der Batteriezellen und der evtl. weiteren elektrischen und/oder elektronischen Komponenten im Gehäuseinneren zu vermeiden.

Unter einer Traktionsbatterie wird eine Batterie bzw. ein Batteriepack zur Bereitstellung von elektrischer Energie für einen reinen elektromotorischen Antrieb oder zumindest einen elektromotorisch unterstützten Antrieb des Nutzfahrzeugs verstanden. Das Nutzfahrzeug kann hierbei als Mildhybrid-, Hybrid- oder Elektrofahrzeug ausgeführt sein.

Gemäß allgemeinen Gesichtspunkten der Erfindung wird die genannte Aufgabe dadurch gelöst, dass das Batteriegehäuse zur thermischen Isolierung außenseitig zumindest teilweise von einem Schaum, d. h. einem Körper oder einer Anordnung aus Schaummaterial, umgeben ist. Der Begriff Schaummaterial soll auch ein Verbundschaummaterial umfassen.

Die außenseitige, zumindest teilweise Ummantelung des Batteriegehäuses mit einem thermisch isolierenden Schaum bietet den Vorteil, dass die Batterie auch im Parkbetrieb vor einer starken Erwärmung bedingt durch hohe Umgebungstemperaturen, Sonneneinstrahlung und/oder durch Wärmeabstrahlung von im Fahrbetrieb aufgeheizten Komponenten geschützt ist. Ein weiterer Vorteil ist, dass Nutzfahrzeughersteller mit dem erfindungsgemäßen Lösungsansatz Fahrzeuge, insbesondere diejenigen, die für den Einsatz in Heißländern vorgesehen sind, mit der Schaumummantelung auf baulich einfache und kostengünstige Weise nachrüsten können, ohne bestehende Batteriekonzepte im Innern des Batteriegehäuses anpassen zu müssen. Ein besonderer Vorzug der Erfindung liegt ferner darin, dass der zur thermischen Isolierung außenseitig am Batteriegehäuse angeordnete Schaum gleichzeitig eine absorbierende Wirkung in Bezug auf eine Aufprallenergie hat und daher gleichzeitig als Aufprallschutz für die Batterie dient. Hierbei dienen die Lufteinschlüsse des Schaummaterials als Mini-Dämpfer.

Dies ist von besonderer Bedeutung bei Nutzfahrzeugen, bei denen das Batteriegehäuse an einer Fahrzeugaußenseite gehaltert ist. Beispielsweise kann das Nutzfahrzeug ein Lastkraftwagen, insbesondere ein Sattelkraftfahrzeug sein, bei dem das Batteriegehäuse an einem Leiterrahmen (Tragrahmen) befestigt ist. Das Nutzfahrzeug kann ferner ein Omnibus sein, bei dem das Batteriegehäuse auf dem Dach des Omnibusses befestigt ist.

Im Rahmen der Erfindung besteht ferner die Möglichkeit, dass eine thermisch isolierende und/oder lichtreflektierende Schicht auf das Schaummaterial an wenigstens einer dem Batteriegehäuse abgewandten Außenseite des Schaumaterials, vorzugsweise an einer der Sonnenstrahlung ausgesetzten Außenseite, aufgebracht ist.

Beispielsweise kann das Schaummaterial zur Ausbildung der lichtreflektierenden Schicht an der wenigstens einen Außenseite mit einer weißen Folie oder einer lichtreflektierenden Folie aus einem spiegelnden Metall, vorzugsweise aus Aluminium, kaschiert sein. Eine andere Möglichkeit besteht darin, die lichtreflektierende Schicht in Form einer aufgebrachten Farbschicht, vorzugsweise einer weißen Farbschicht, auszuführen.

Gemäß einer weiteren Ausgestaltungsform kann das Schaummaterial eine glatte oder vorzugsweise eine geprägte Oberflächenverdichtung aufweisen. Dadurch kann eine verbesserte thermische Isolierung und Dichtheit erreicht werden.

Eine weitere vorteilhafte Ausführungsvariante sieht vor, dass eine durch das Schaummaterial gebildete Ummantelung des Batteriegehäuses mehrteilig ausgeführt ist, wobei die einzelnen Elemente aus Schaummaterial über einem Formschluss zusammensteckbar sind. Dies ermöglicht ein einfaches Anbringen und Entfernen der Schaumummantelung, so dass die thermische Isolierung des Batteriegehäuses abhängig von den erwarteten Wetterbedingungen angepasst werden kann.

Alternativ oder zusätzlich kann der Schaum auf das Batteriegehäuse aufgeklebt und/oder mittels eines Befestigungsbandes oder -gurtes am Batteriegehäuse befestigt werden.

Der zur thermischen Isolierung verwendete Schaum kann ein Weichschaum oder Hartschaum sein. Der Schaum kann ferner ein Polyurethan-Schaum, ein Schaumkunststoff, ein PVC-Schaum, ein Acrylschaum oder ein Polyethylenschaum sein. Ferner kann der Schaum nach DIN 4102 schwer- oder nicht entflammbar sein. Hierzu kann der Schaum beispielweise ein Flammschutzmittel enthalten.

Gemäß einer bevorzugten Ausgestaltungsform kann zumindest ein Teil des Schaummaterials, der sich in Fahrtrichtung von dem Batteriegehäuse wegerstreckt, eine luftwiderstandsoptimierte Form aufweisen. Beispielsweise kann dieser Teil des Schaummaterials eine keilförmige Form aufweisen, die sich in Fahrtrichtung verjüngt, und/oder eine stromlinienförmige oder weitgehend glatte, aerodynamisch vorteilhafte Oberflächenform aufweisen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Seitenansicht eines Lastkraftwagens, mit einer am Leiterrahmen gehalterten Traktionsbatterie; und
- Figur 2: eine stark schematisierte Ansicht eines Batteriegehäuses mit einer außenseitig angebrachten thermischen Isolierung gemäß einer Ausführungsform der Erfindung.

Gleiche oder funktional äquivalente Elemente sind in allen Figuren mit denselben Bezugszeichen bezeichnet.

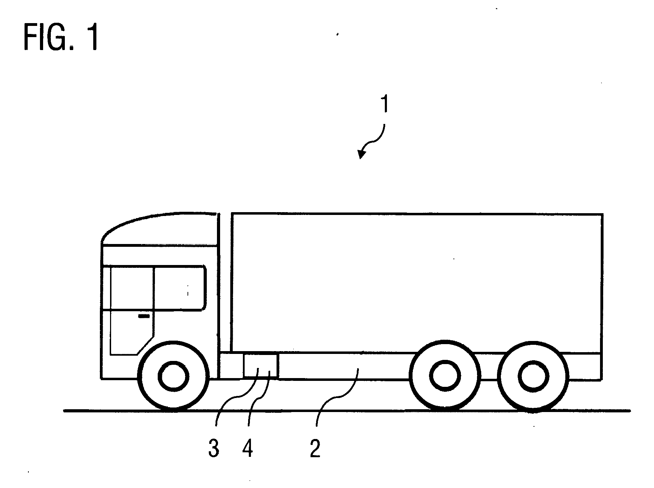

Figur 1 zeigt eine schematische Seitenansicht eines Lastkraftwagens 1, mit einer am Leiterrahmen 2 gehalterten Traktionsbatterie. Die Traktionsbatterie umfasst ein Batteriegehäuse 3, in dem mehrere parallel und/oder seriell miteinander verschaltete und zu einem Zellenverbund zusammengefasste Einzelzellen, z. B. Li-Ionen-Zellen (nicht dargestellt) angeordnet sind. Die Batterie wird im Fahrbetrieb durch eine Kühlvorrichtung zum Temperieren der Batterie (ebenfalls nicht gezeigt) gekühlt, die eine im Batteriegehäuse angeordnete Kühlplatte aufweist, die wärmeleitend mit dem Zellenverbund verbunden ist, wobei das Batteriegehäuse einen Kühlflüssigkeitsanschluss zum Durchleiten einer Kühlflüssigkeit aufweist. Der Lastkraftwagen kann als Mildhybrid-, Hybrid- oder Elektrofahrzeug ausgeführt sein, bei dem die Traktionsbatterie elektrische Energie für einen reinen elektromotorischen Antrieb oder zumindest einen elektromotorisch unterstützen Antrieb des Nutzfahrzeugs bereitstellt.

In Figur 1 ist ersichtlich, dass das Batteriegehäuse 3, insbesondere die von der Fahrzeuginnenseite weggewandte Gehäuseseite, einer Sonnenstrahlung ausgesetzt ist. Ferner können auch die anderen Gehäuseteile des Batteriegehäuses 3 einer Wärmestrahlung ausgesetzt sein, beispielsweise verursacht von einer stark aufgewärmten Straße in Heißländern oder durch stark im Fahrbetrieb aufgewärmte Fahrzeugkomponenten.

Um eine starke Erwärmung des Batteriegehäuses und der darin gehalterten Batteriezellen im Parkbetrieb, d. h. bei einem abgestellten, ausgeschalteten Fahrzeug, zu vermeiden, in dem die Kühlvorrichtung der Batterie nicht aktiv ist, ist das Batteriegehäuse 3 zur thermischen Isolierung außenseitig zumindest teilweise von einem Schaummaterial 4 umgeben.

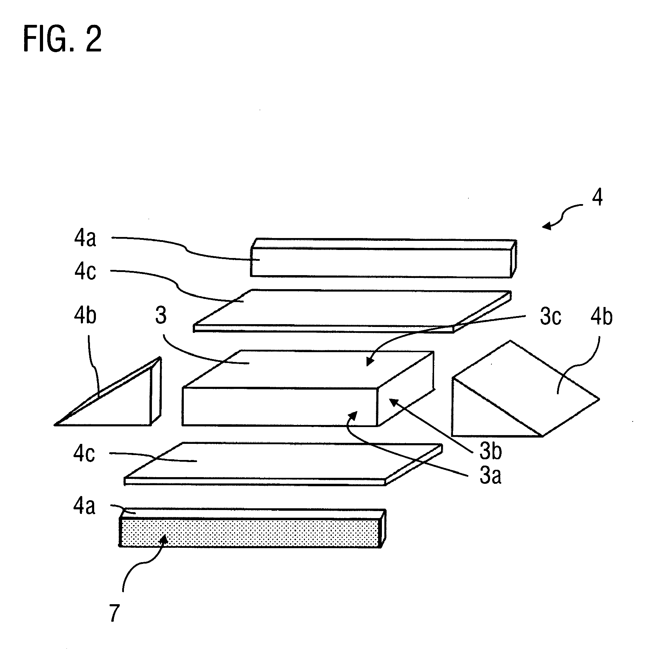

Dies ist in Figur 2 beispielhaft gezeigt. Figur 2 zeigt hierbei eine stark schematisierte Ansicht des Batteriegehäuses 3 mit einer außenseitig angebrachten thermischen Isolierung 4 gemäß einer Ausführungsform der Erfindung.

Die Schaumummantelung 4 ist in dem gezeigten Ausführungsbeispiel mehrteilig ausgeführt und umfasst jeweils zwei auf den Seitenflächen 3b des Batteriegehäuses befestigte keilförmige Elemente 4b, zwei auf der Ober- bzw. Unterseite 3c des Batteriegehäuses befestigte plattenförmige Elemente 4c und zwei auf der Vorder- bzw. Rückseite 3a des Batteriegehäuses 3 befestigte quaderförmige Elemente 4a. Die Elemente 4a-4c sind auf das Batteriegehäuse 3 aufgeklebt. Die Elemente 4b erstrecken sich in bzw. entgegen der Fahrtrichtung vom Batteriegehäuse 3 weg, so dass deren keilförmige Ausführung eine luftwiderstandsoptimierte Form aufweist.

Die vom Batteriegehäuse 3 abgewandte Außenseite des Schaumaterials 4 kann ganz oder teilweise eine lichtreflektierende Schicht aufweisen. Beispielsweise kann die zur Fahrzeugaußenseite weisende Oberfläche des Schaumelements 4a, die der in Figur 1 sichtbaren Oberfläche entspricht, mit einer lichtreflektierenden metallischen Folie 7, z. B. einer Aluminiumfolie, kaschiert sein.

Der zur thermischen Isolierung verwendete Schaum 4 kann ein Weichschaum oder Hartschaum sein. Der Schaum kann beispielsweise ein Polyurethan-Schaum, ein Schaumkunststoff, ein PVC-Schaum, ein Acrylschaum oder ein Polyethylenschaum sein.

Es wird betont, dass die thermische Isolierung 4 aus einem Schaumwerkstoff das Batteriegehäuse 3 ganz oder nur teilweise ummanteln kann. Ferner ist es denkbar, die Dicke des Schaums 4 über die Fläche der Gehäusewand zu variieren, um auf diese Weise eine örtlich unterschiedliche thermische Isolationsfähigkeit des Batteriegehäuses zu schaffen. Über eine derart variierte Schaumdickenausbildung kann z. B. ein bestimmter Bereich des Batteriegehäuses in besonderer Weise thermisch geschützt sein, um beispielsweise besondere Bauteile oder Funktionselemente, wie beispielsweise eine Pumpe, Ventile, Ein-/oder Auslassöffnungen der Kühlvorrichtungen, Messeinrichtungen oder dergleichen. besonders vor Extremtemperaturen zu schützen. Der Schaum kann vorgestanzt sein, z. B. in einzelne Keile, Qua- der und/oder plattenförmige Elemente, wie in Figur 2 beispielhaft gezeigt. Die Schaumummantelung 4 kann auch so ausgeführt sein, dass die Ummantelung Aussparungen, Durchgangsöffnungen etc. für vorhandene Kühlleitungen, Anschlüsse etc. aufweist.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Nutzfahrzeug
- 2: Leiterrahmen
- 3: Batteriegehäuse
- 3a: Vorderseite
- 3b: Seitliche Außenseite
- 3c: Oberseite
- 4: Schaum
- 4a-4c: Elemente der Schaumummantelung
- 7: Metallische Folie

## Patentansprüche

1. Nutzfahrzeug (1), umfassend
eine Traktionsbatterie mit einem Batteriegehäuse (3), in dem mehrere parallel und/oder seriell miteinander verschaltete und zu einem Zellenverbund zusammengefasste Einzelzellen angeordnet sind;
**dadurch gekennzeichnet, dass** das Batteriegehäuse (3) zur thermischen Isolierung außenseitig zumindest teilweise von einem Schaummaterial (4) umgeben ist.

2. Nutzfahrzeug (1) nach Anspruch 1, **dadurch gekennzeichnet,**
(a) **dass** das Batteriegehäuse (3) an einer Fahrzeugaußenseite gehaltert ist; und/oder
(b) **dass** das Nutzfahrzeug ein Omnibus ist und das Batteriegehäuse auf dem Dach des Omnibusses befestigt ist oder dass das Nutzfahrzeug ein Lastkraftwagen, vorzugsweise ein Sattelkraftfahrzeug (1), ist und das Batteriegehäuse (3) an einem Leiterrahmen (2) befestigt ist.

3. Nutzfahrzeug (1) nach Anspruch 1 oder 2, **dadurch gekennzeichnet,**
**dass** auf das Schaummaterial (4) an wenigstens einer dem Batteriegehäuse (3) abgewandten Außenseite des Schaumaterials, vorzugsweise an einer der Sonnenstrahlung ausgesetzten Außenseite, eine lichtreflektierende Schicht aufgebracht ist.

4. Nutzfahrzeug nach Anspruch 3, **dadurch gekennzeichnet, dass** das Schaummaterial zur Ausbildung der lichtreflektierenden Schicht an der wenigstens einen Außenseite mit einer weißen Folie oder einer lichtreflektierenden Folie (7) aus einem spiegelnden Metall, vorzugsweise aus Aluminium, kaschiert ist.

5. Nutzfahrzeug nach Anspruch 3, **dadurch gekennzeichnet, dass** die lichtreflektierende Schicht eine aufgebrachte Farbschicht, vorzugsweise eine weiße Farbschicht, ist.

6. Nutzfahrzeug nach einem der vorhergehenden Ansprüche, **dadurch gekennzeichnet,**
(a) **dass** eine durch das Schaummaterial (4) gebildete Ummantelung des Batteriegehäuses mehrteilig ausgeführt ist, wobei die einzelnen Elemente (4a, 4b, 4c) aus Schaummaterial über einem Formschluss zusammensteckbar sind; und/oder
(b) **dass** das Schaummaterial (4) auf das Batteriegehäuse (3) aufgeklebt ist.

7. Nutzfahrzeug nach einem der vorhergehenden Ansprüche, **dadurch gekennzeichnet,**
(a) **dass** der Schaumstoff (4) ein Weichschaum oder Hartschaum ist, der nach DIN 4102 schwer- oder nicht entflammbar ist, und/oder
(b) **dass** das Schaummaterial ein Polyurethan-Schaum, Schaumkunststoff, PVC-Schaum, ein Acrylschaum oder ein Polyethylenschaum ist.

8. Nutzfahrzeug nach einem der vorhergehenden Ansprüche, **dadurch gekennzeichnet, dass** ein Teil (4b) des Schaummaterials (4), der sich in Fahrtrichtung von dem Batteriegehäuse (3) wegerstreckt, eine luftwiderstandsoptimierte Form aufweist.

9. Nutzfahrzeug nach einem der vorhergehenden Ansprüche, **gekennzeichnet durch** eine Kühlvorrichtung zum Temperieren der Batterie, die eine im Batteriegehäuse angeordnete Wärmeleiteinrichtung, vorzugsweise eine Kühlplatte, aufweist, die wärmeleitend mit dem Zellenverbund verbunden ist, wobei das Batteriegehäuse einen Kühlflüssigkeitsanschluss zum Durchleiten einer Kühlflüssigkeit aufweist.
